# EUROPEAN PATENT APPLICATION

(11) **EP 0 537 366 A1**
(43) Date of publication of application: **21.04.1993**
(21) Application number: 92909362.3
(22) Date of filing: 27.04.1992
(51) Int. Cl.: B62M 25/04

(54) **GEAR CHANGE LEVER FOR BICYCLE**

(30) Priority: 01.05.1991 JP 40918/91 U
(71) Applicant: MAEDA INDUSTRIES, LTD., Osaka-fu 587 (JP)
(72) Inventor: IWASAKI, Yoshihisa, Minamikawachi-gun Osaka-fu 587 (JP)
(74) Representative: Reinhard - Skuhra - Weise & Partner
(86) International application number: JP9200554
(87) International publication number: WO9219488

(57) **Abstract**

A gear change lever for a bicycle comprising a lever shaft provided on a bracket mounted on a bicycle frame and a control lever having a tubular body portion and a control arm portion extending radially outwardly from the outer circumference of the tubular body portion rotatably supported relative to the lever shaft by fitting the tubular body portion over the lever shaft, wherein the lever is provided with the following technical means so as to improve a work efficiency in mounting a control wire, as well as the controllability of the lever. A locking pin (22) is provided to one of the bracket and the tubular body portion (9) in such a manner as to protrude toward the other, while a guide groove (23) extending in an arc-like fashion is provided to the other of them for permitting the rotation of the control lever (8) within a predetermined range with the locking pin (22) being received therein, and a locking structure for elastically locking the locking pin (22) is provided at the end of the guide groove (23).

## Description

### [Field of the Invention]

The present invention relates to a bicycle speed change lever assembly. More specifically, the present invention relates to a bicycle speed change lever assembly wherein installation of a control cable can be achieved easily.

### [Background Art]

A bicycle speed change system generally comprises a main speed change unit mounted near a bicycle wheel, a speed change lever assembly mounted at an appropriate position on a bicycle frame or on a handlebar, and a control cable which connectes the main speed change unit to the speed change lever assembly. The speed change lever assembly has a control lever, which is rotated to pull or rlease the control cable so as to activate the main speed change unit.

A common speed change lever assembly comprises a lever shaft which usually formed on a bracket mounted to a bicycle frame or a handlebar, and a control lever including a boss portion and an operating arm portion extending axially outward from that boss portion. The control lever is rotatably fitted on the lever shaft On the outside wall of the boss portion, there is fastened an end of the control cable, and in addition, there is formed a cable winding groove along which the control cable is wound and unwound. When the control lever is rotated in one direction, the control cable is wound along the cable winding groove, and therefore, pulled. On the other hand, when the control lever is rotated in the other direction, the control cable is released and the unwound portion of the control cable is pulled back by a return spring located in the main speed change unit. This cable operation, more specifically the axial vector thereof, is transmitted to the main speed change unit and activates it.

The control lever is given a predtermined rotational resistance by friction, for instance. This rotational resistance counteracts the pull of the return spring, and allows the control lever to stay at a selected rotational position. This means that in order to wind the control cable, the control lever must be rotated by a force greater than the sum of the return spring pull and the frinction. Accordingly, the amount of force required to rotate the control lever varies according to the rotational position of the control lever, which poses a potential problem of decreased operatability in speed changing operation.

To solve this problem, a speed change lever assembly of the above-mentioned type is sometimes provided with a spring built in the control lever. This spring elastically counters the pull of the return spring located in the main speed change unit so that the control lever may be turned more easily.

Now, in a speed change lever assembly of the above-mentioned type, when the control wire is to be attached to connect the control lever to the main speed change unit, the control lever must be turned to its maximum unwinding position, where adjustment is made as to the relationship between the rotational position of the control lever and the gear shift timing position of the main speed change unit.

However, if the speed change lever assembly is provived with the above-mentioned spring, the wire cannot be attached unless the control lever, turned to the above-mentioned position, is positively retained at that positon against the pulling force of that spring. Thus, an assembly worker must manually hold the control lever, for example, or the control lever must be given a rotational resistance much greater than needed for speed change operation.

This naturally leads to a reduced productivity in the process of the control wire installation, or deteriorated performance of the speed change lever assembly resulting from an altered pulling force of the spring.

Other possible means to retain the control lever at its desired positon against the spring's pull may include, for example, a click mechanism, but they pose another problem of surging manufacturing cost.

### [Disclosure of the Invention ]

Therefore, it is a purpose of the the present invention to provide a bicycle speed change lever assembly wherein the control lever can be retained at a predetermined position against the pulling force of the spring, and whereby installation of the control cable is achieved at an improved productivity.

Another purpose of the present invention is to provide the bicycle speed change lever assembly wherein the friction resistance given to the control lever can be reduced for improved speed change operatability.

Still another purpose of the present invention is to provide a bicycle speed change lever assembly which is capable of retaining the control lever at a desired rotational position against the pull of the spring, with a very simple design and at a very low cost, without depending on such mechanisms as a click mechanism which call for high cost of manufacturing.

The present invention provides a bicycle speed change lever assembly comprising: a lever shaft provided on a bracket which is mounted to a bicycle frame; and a control lever including a boss portion rotatably fitted on the lever shaft, and an operating arm portion extending radially outward therefrom: characterized in that
one of the bracket and boss portion is formed with a retainer pin projecting toward the other of the bracket and boss portion, said other of the bracket and boss portion is formed with an arcuate guide groove which accommodates the retainer pin while allowing the control lever to rotate within a predetermined range, and an end portion of the guide groove is provided with a retainer device for elastically retaining the retainer pin.

Other purposes, characteristics and advantages of the present invention will be clearly understood through the description of the preferred embodiments to be described hereinafter with reference to the attached drawings.

### [Brief Description of the Drawings ]

Figures 1 through 5 are views to show a first embodiment of the present invention.

Fig. 1 is a plan view of a bicycle speed change lever assembly according to the present invention.

Fig. 2 is a side view of the bicycle speed change lever assembly according to Fig. 1 as viewd from the direction indicated by Arrow P.

Fig. 3 is a cross-sectional view taken on the line III - III in Fig. 2.

Fig. 4 is a cross-sectional view taken on the line IV - IV in Fig. 2.

Fig. 5 is a fragmentary enlarged view of Fig. 4.

Fig. 6 is a fragmentary enlarged view of another embodiment, corresponding to Fig. 5. of the first embodiment.

### [Best Modes for Carrying Out the Invention ]

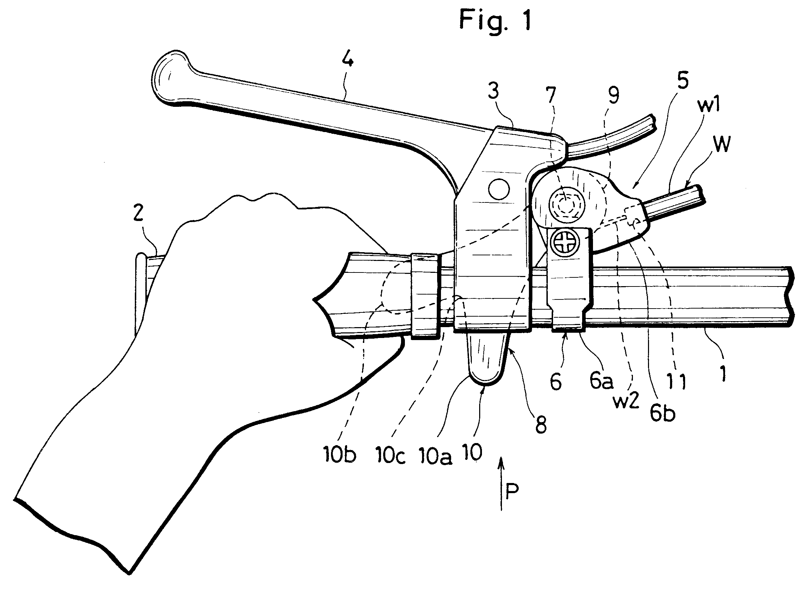

Now, the best modes for carrying out the present invention will be described in specific detail referring to the Figs. 1 through 6.

Figs. 1 through 5. show a first embodiment of the present invention.

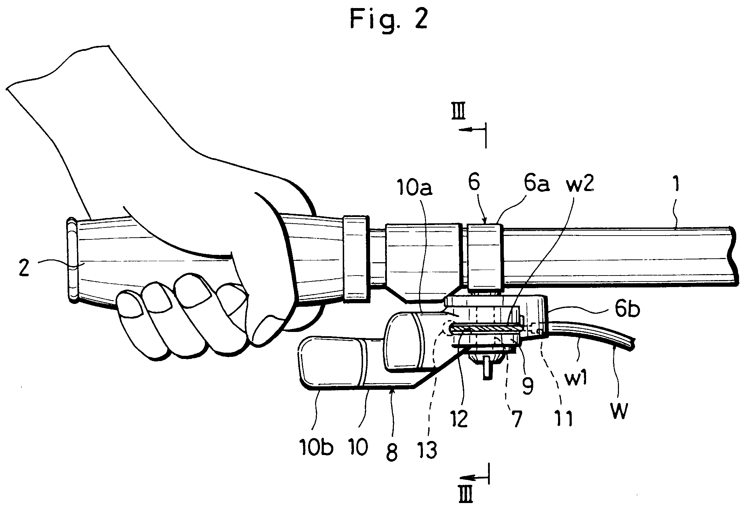

Fig. 1 is a plan view of a bicycle speed change lever assembly according to the present invention mounted on a bicycle handlebar known as a flat handlebar. Fig. 2 is a side view thereof when the same is viewed from the rear of the bicycle (from the direction shown by Arrow P).

The handlebar 1 is formed, at both end portions thereof, with respective grip portions 2 which are made of soft resin for instance. Brake brackets 3 are each provided at an inward location relative to the respective grip portions 2, in a manner that they project forwardly to allow their brake levers 4, respectively pivoted at their base end portions, to extend ahead of the grip portions 2.

As shown in Figs. 1 and 2, a speed change lever assebly 5 according to the present embodiment is mounted at a location inward of a brake bracket 3 and below the handlebar 1, and comprises a bracket 6 clamped on the handlebar 1, and a control lever 8 pivotally supported by the bracket 6.

The bracket 6 includes a mounting band portion 6a for clamping on the handlebar 1, and a lever mounting portion 6b cantilevered by the mounting band portion 6a ahead of the handlebar 1. The lever mounting portion 6b is formed with a lever shaft 7 projecting downward.

The control lever 8 includes a boss portion 9 and an operating arm portion 10 extending radially outward from the boss portion 9. The boss portion is fitted onto the lever shaft 7, thereby pivotally supporting the entire control lever 8 on the bracket 6.

A control wire W comes from a main speed change unit which is not shown in Figs. An end of an outer sheath w1 of the control wire W is fastened to a sheath stopper 11 integrally formed with the lever mounting portion 6b. An inner wire w2 extends out of the sheath stopper 11, and around the outer wall of the boss portion 9 along a wire guide groove 12. An end nipple 13 of the inner wire w2 is fastened to an appropriate location on the outside wall of the boss portion 9.

When the lever arm 10 is rotated, the end nipple 13 of the inner wire w2 also rotates with the boss portion 9, causing the inner wire w2 to be pulled out of, or released back into, the outer sheath w1. This relative axial movement between the outer sheath w1 and the inner wire w2 activates the main speed change unit which is not shown in Figs.

As shown in Fig. 1, the operating arm portion 10 according to the present embodiment has a Y shape, having a pair of branchng arm portions 10a, 10b, each having an inner and an outer side walls. Thus, each of the side walls serves as an operational surface which may be pressed by a bicycle rider. A bicycle rider may press a convenient side wall depending on the rotational position of the operating arm portion 10. A branching portion 10c of the branching arms 10a, 10b may also be used to place a finger and to rotate the operaing arm portion 10. This configuration allows a bicycle rider to turn the operating arm portion 10 in either direction only with his/her thumb or a forefinger alone.

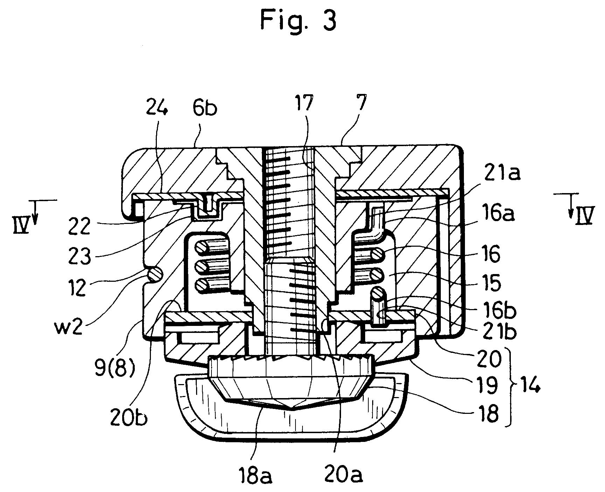

As shown in Fig. 3, the speed change lever assembly according to the present embodiment employs a friction mechanism 14 at a side of the boss portion 9 opposite with the lever mounting portion 6b in order to provide the control lever 8 with a predetermined level of friction. At the same time, the boss portion 9 has an annular space 15 to house a coil spring 16 which elastically urges the control lever 8.

The friction mechanism 14 comprises an adjusting screw 18 set into a threaded hole 17, a pressing cover 19 which is placed inward of the adjusting screw 18 to receive a head portion 18a of the adjusting screw 18, and a disk-shaped spring washer 20. A center hole 20a of the spring washer 20 is inserted by an end portion of the lever shaft 7, whereas an outer periferal portion 20b thereof is contacted by an inner side wall of the boss portion 9. This spring washer 20 is axially slidable along the end portion of the lever shaft 7, but is unable to rotate radially against it. An inner periferal portion of the spring washer 20 can be axially pressed, via the pressing cover 19, by the adusting screw 18. With this arrangement, the adjusting screw 18 may be turned to an extent where the two side walls of the boss portion 9 is pressed between the spring washer 20 and the lever mounting portion 6b to generate the predetermined level of friction.

The coil spring 16 has an end 16a which is fixedly inserted into a fixing hole 21a provided on the boss portion 9, and another end 16b which also is fixedly inserted into another fixing hole 21b formed on the spring washer 20. As has been mentioned, the spring washer 20 is inserted by the lever shaft 7 in such a manner that it is unable to turn around the lever shaft 7. With this arrangement, the coil spring 16 elastically urges the control lever 8 in a direction which counters a pull exerted by a return spring mounted in the main speed change unit; in other words, the control lever 8 is elastically urged in a wire-winding direction.

Now, in this particular embodiment, the lever mounting portion 6b of the bracket 6 is provided with a retainer pin 22 projecting toward the boss portion 9 of the control lever 8, whereas the boss portion 9 is formed with a corresponding guide groove 23 to accommodate the retainer pin 22.

The retainer pin 22 according to this embodiment is made by press machining, and is integrally formed with a washer 24 so as to be substantially parallel to the lever shaft when the washer 24 is fitted into the lever mounting portion 6b.

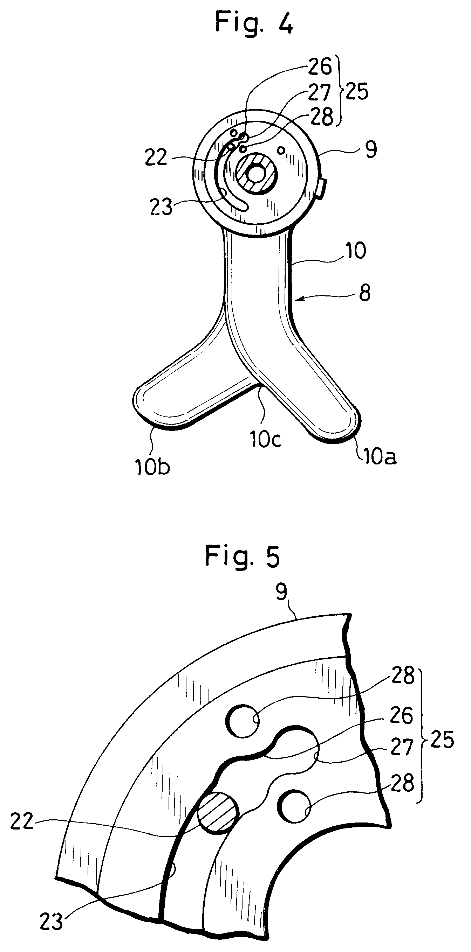

On the other hand, as shown in fig. 4, the guide groove 23 is formed in an arcuate shape around the center axis of the lever shaft 7 so that it would accomodate the retainer pin 22 while allowing the control lever 8 to turn within a predetermined range.

In addition, at an end portion of the guide groove 23, there is formed a retainer device 25 capable of elastically retaining the retainer pin 22, as shown in the Figs. 4 and 5.

According to the present embodiment, this retainer device 25 is provided at an end portion of the guide groove 23, and includes a retaining hole 27 having a dimameter capable of accommodating the retainer pin 22, a neck portion 26 which connects the end of the groove 23 to the retaining hole 27, and a pair of through holes 28 flanking the neck portion 26. The width of the neck portion 26 is made slightly smaller than the diameter of the retaining hole 27.

In this embodiment, the boss portion 9 is made of resin, and the gap at the neck portion 26 is made smaller than the diameter of the retainer pin 22. Therefore, the retainer pin 22 can be elastically retained at the retainer hole 27. Furthermore, since the neck portion 26 is flanked by the through holes 28, the neck portion 26 can easily deform elastically, allowing the retainer pin to pass through the neck portion 26 when the control lever 8 is turned by a force greater than a predetermined level.

The provision of the retainer device 25 have made possible to retain the retainer pin 22 at an end portion of the guide groove 23 against the elastic pull exerted by the coil spring 16 provided in the speed change lever assembly. Thus, the control lever 8 can be retained at its end-of-the-range positon where the ratainer pin 22 engages the end of the guide groove.

This eliminates the need for an assembly worker to manually hold the control lever 8 against the pull exerted by the coil spring 16 when attaching the control wire W. The productivity in this assembly step is remarkably improved.

It also elimintaes the need for the control lever 8 to be given an increased friction resistance in order to be retained at its end-of-the-range position. Thus, the potential interference with the speed shift performance by the increased friction no longer exists.

Another advantage is that the retainer device 25 according to the present invention only makes use of the retainer pin 22 and the guide groove 23, which will not cause significant increase in manufacturing cost as would be caused, for example, by the introduction of the click mechanism.

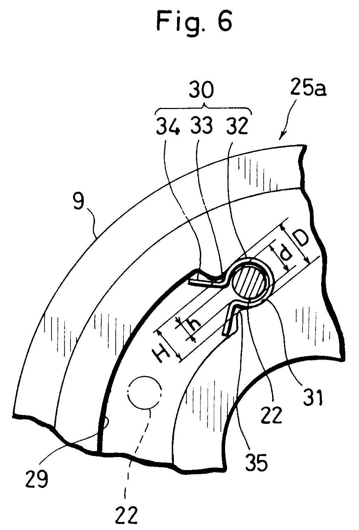

Fig. 6 shows a second embodiment of the present invention.

A retainer device 25a according to this embodiment comprises a retainer spring 30 attached to the end of the guide groove 29. The retainer spring 30 is capable of elastically retaining the retainer pin 22.

The retainer spring 30 has an annular base portion 32 fitted to the fastening hole 31 which connects with the end of the guide groove 29, and, via a neck portion having a gap h which is smaller than the diameter d of the retainer pin 22, a pair of free end portions 34 extending into the guide groove 29 with their respective ends leaving away to each other. The inner diameter d of the annular base end portion 32 is set to correspond the diameter d of the retainer pin 22, so that the retainer pin 22 is elastically fitted into the annular base end portion 32.

The fastening hole 31 is connected to the guide groove 29 via the neck portion 35 having a gap H, which is set smaller than the outer diameter D of the retainer spring 30, and is made so as to allow the neck portion 33 of the retainer spring 30 to open wider than the diameter d of the retainer pin 22. Thus, when the control lever 8 is turned by a force greater than a predetermined value, the retainer pin 22 presses, elastically widens, and passes through the neck portion 33.

With the above-mentioned arrangement, the control lever 8 can be retained at its rotational position where the retainer pin 22 engages the end portion of the guide groove, with the same advantages as have been achieved in the first embodiment.

An additional advantage of the present embodiment is that since the neck portion 35 of the fastening hole 31 has the gap H which is greater than the diameter of the retainer pin 22, and since the retainer device 25a can be removed simply by detaching the retainer spring 30, the emdodiment boss portion can also serve a bicycle speed change lever assembly which is not equipped with the coil spring 15.

The scope of the present invention should not be limited to those described hereinabove.

For example, instead of providing the bracket 6 with the retainer pin 22 and providing the boss portion 9 with a guide groove 16 or 29 as described in the embodiments, it is possible to provide the bracket 6 with a guide groove and the boss portion 9 with a retainer pin.

Also, in stead of forming the retainer pin 22 to project into a side face of the boss portion 9 as described in the embodiments, it is possible to form the retainer pin 22 to project into an outer circumferencial wall of the boss portion 9.

Still another variation may include utilization of a different type of retainer device other than the retainer devices 25, 25a; in the retainer device 25, the elasticity of the boss portion 9 is responsible for the retaining function, while in the retainer device 25a, a retainer spring 30 is employed for that function.

Still further, it is possible to form the retainer device at each end of the guide groove instead of at one end as described hereinabove.

## Claims

1. A bicycle speed change lever assembly comprising:
a lever shaft provided on a bracket which is mounted to a bicycle frame; and
a control lever including a boss portion rotatably fitted on the lever shaft, and an operating arm portion extending radially outward therefrom: wherein
one of the bracket and boss portion is formed with a retainer pin projecting toward the other of the bracket and boss portion,
said other of the bracket and boss portion is formed with an arcuate guide groove which accommodates the retainer pin while allowing the control lever to rotate within a predetermined range, and
an end portion of the guide groove is provided with a retainer device for elastically retaining the retainer pin.

2. The bicycle speed change lever assembly according to Claim 1, wherein the retainer device comprises a retaining hole having such a diameter as to allow accommodation of the retainer pin, and a neck portion which connects the end portion of the guide groove to the retaining hole, the neck portion having a width smaller than the diameter of the retaining hole.

3. The bicycle speed change lever assembly according to Claim 2, wherein the neck portion is flanked by a pair of holes.

4. The bicycle speed change control lever assembly according to Claim 1, wherein the retainer pin is formed integrally on a washer which is fixedly fitted to either the control lever or the bracket.

5. The bicycle speed change control lever assembly according to Claim 1, wherein the retainer device comprises a retainer spring capable of retaining the retainer pin, the retainer spring being provided at said end portion of the guide groove.

6. The bicycle speed change control lever assembly according to Claim 1, wherein the retainer device is provided at each end portions of the guide groove.

7. The bicycle speed change control lever assembly according to Claim 1, wherein the retainer device is provided only at said end portion of the guide groove.

8. The bicycle speed change control lever assembly according to Claim 1, wherein the retainer pin is provided on the bracket, and the guide groove is provided on the boss portion of the control lever.

9. The bicycle speed change control lever assembly according to Claim 8, wherein the boss portion is integrally formed of resin.
